# EUROPÄISCHE PATENTSCHRIFT

(11) **EP 1 704 348 B1**
(45) Veröffentlichungstag und Bekanntmachung des Hinweises auf die Patenterteilung: **07.05.2008**
(21) Anmeldenummer: 04803831.9
(22) Anmeldetag: 14.12.2004
(51) Int. Cl.: F16H 47/04

(54) **HYDROSTATISCH-MECHANISCHES LEISTUNGSVERZWEIGUNGSGETRIEBE**
HYDROSTATIC MECHANICAL POWER-SPLIT TRANSMISSION
BOITE HYDROSTATIQUE MECANIQUE A DERIVATION DE PUISSANCE

(30) Priorität: 14.01.2004 DE 102004001929
(43) Veröffentlichungstag der Anmeldung: 27.09.2006
(73) Patentinhaber: ZF FRIEDRICHSHAFEN AG, 88038 Friedrichshafen (DE)
(72) Erfinder: ULBRICH, Peter, A-4441 Behamberg (AT)
(86) Internationale Anmeldenummer: PCT/EP2004/014203
(87) Internationale Veröffentlichungsnummer: WO 2005/068877

(56) Entgegenhaltungen:
- DE-A1- 10 122 823
- FR-A- 1 438 647
- US-A- 4 429 593
- US-A- 5 080 637
- US-A- 5 248 283
- US-A- 5 496 223
- US-A- 5 888 162

## Beschreibung

Die vorliegende Erfindung betrifft ein hydrostatisch-mechanisches Leistungsverzweigungsgetriebe für Kraftfahrzeuge, insbesondere für landwirtschaftliche Nutzfahrzeuge, nach dem Oberbegriff des Anspruchs 1, wie z.B aus der US 5 888 162 A bekannt.

Hydrostatisch-mechanische Leistungsverzweigungsgetriebe bestehen aus einem stufenlos verstellbaren Hydrostatgetriebe mit einer volumenverstellbaren und einer volumenkonstanten Einheit, einem Summierungsgetriebe und einem Bereichsgetriebe mit mehreren schaltbaren Gängen. Die über eine Antriebswelle eingeleitete Leistung verzweigt sich zum einen zu dem Hydrostatgetriebe und zum anderen auf eine Eingangswelle des Summierungsgetriebes. Durch das Summierungsgetriebe werden die Drehzahlen und Drehmomente des Hydrostatgetriebes und der Antriebsmaschine zusammengeführt. Mit Hilfe von Schaltkupplungen sind verschiedene Gänge anwählbar, indem die Ausgangswelle des Summiergetriebes über unterschiedliche Stirnradstufen mit der Abtriebswelle gekoppelt wird. Stufenlose Getriebe haben gegenüber mechanischen Getrieben den Vorteil, dass in jedem Fahrzustand mit optimaler Motordrehzahl gefahren werden kann und keine Zugkraftunterbrechung beim Schalten auftritt.

In der DE 39 03 877 ist ein hydrostatisch-mechanisches Leistungsverzweigungsgetriebe offenbart, das aus einem vierwelligen Zahnräder-Planetengetriebe und einem dazu parallel angeordneten stufenlos einstellbaren hydrostatischen Getriebe sowie weiteren Zahnrädern besteht. Durch Schalt-Zahnkupplungen werden mehrere Gänge realisiert, in denen jeweils das hydrostatische Getriebe eine stufenlose Verstellung der Übersetzungen des Gesamtgetriebes bewirkt. Der Gangwechsel erfolgt bei synchronen Drehzahlen lastfrei und ohne Zugkraftunterbrechung. Durch die Gestaltung der Schalt-Zahnkupplungen und der vorgesehenen Steuerung beim Umschaltvorgang kann das Einlegen eines neuen Ganges und das anschließende Auslegen des alten Ganges ohne jeden Ruck erfolgen. Der Rückwärtsgang wird durch einen eigenen Zahnradsatz und eine entsprechende Kupplungseinstellung realisiert, die zum Einlegen des Rückwärtsganges zu betätigen ist.

Aus der WO 97/01049 ist ein Leistungsverzweigungsgetriebe bekannt, das mit in einem im Getriebegehäuse angeordneten mechanischen und hydrostatischen Leistungszweig versehen ist. Beide Zweige werden über eine gemeinsame Antriebswelle angetrieben und in einem Koppelgetriebe summiert. Das Koppelgetriebe weist mehrere Ptanetenradsätze und Kupplungen auf und steht mit einer Abtriebswelle in Verbindung. Das Koppelgetriebe ist auf der Antriebswelle angeordnet. Der letzte Planetenradsatz des Koppelgetriebes ist mit Kupplung für Vorwärts- und Rückwärtsfahrt verbindbar, wobei diese Kupplungen mit der Abtriebswelle verbindbar sind. Die Betriebsänderung vom Vorwärts- zum Rückwärtsgang und umgekehrt wird über das Zusammenspiel der Kupplungen erreicht. Bei Stillstand, d. h. der Drehzahl Null, sind beide Kupplungen geschlossen. Je nach gewünschter Fahrtrichtung muss daher zunächst die entsprechende Kupplung betätigt werden.

In der WO 99/15813 sind verschiedene Ausführungsformen eines hydrostatisch-mechanischen Leistungsverzweigungsgetriebes gezeigt, beim dem zumindest das Summierungsgetriebe und die Kupplungen oder auch das Hydrostatgetriebe koaxial zueinander angeordnet sind (In-Line-Bauweise). Zur Anpassung der nötigen Zugkraft kann ein Gruppen-Getriebe mit z. B. einer Acker- und einer Straßengruppe vorgesehen sein. Das Wechseln zwischen diesen Gruppen sowie zwischen Vorwärts- und Rückwärtsfahrt wird durch Betätigen einer entsprechenden Kupplung verwirklicht. Die Umschaltung in den jeweils anderen Bereich erfolgt vorzugsweise nach einer definierten Verweildauer am entsprechenden Übersetzungspunkt oder innerhalb eines begrenzten Übersetzungsbereiches, d. h. bei Stillstand oder gleichbleibender Geschwindigkeit.

Derartigen Getrieben liegt jedoch das gemeinsame Problem zu Grunde, dass das hydrodynamische Getriebe mit einem Schaltgetriebe verbunden ist. Daher stellen sie kein eigentliche stufenloses Getriebe mehr dar, sondern zum Wechsel in verschiedene Bereiche ist das Schalten von Kupplungen notwendig. Insbesondere beim Schalten vom Vorwärts- zum Rückwärtsgang und umgekehrt ist die Betätigung von Kupplungseinrichtungen erforderlich, wodurch sich eine Zugkraftunterbrechung und eine Zeitverzögerung ergibt und der Fahrkomfort negativ beeinträchtigt wird.

Vor allem bei landwirtschaftlichen Nutzfahrzeugen wirkt sich der Umschaltvorgang zwischen den entgegengesetzten Fahrtrichtungen negativ auf die Fahreigenschaften wie z. B. den Anfahrwirkungsgrad, aus. Im Anfahrpunkt können hohe Blindleistungen auftreten, die einem Vielfachen der Antriebsleistung entsprechen können. Dies wirkt sich negativ auf die Dimensionierung und das Gewicht der Getriebe aus.

Aus der DE 101 22 823 A1 der Anmelderin ist ein Leistungsverzweigungsgetriebe mit einem hydrostatischen Getriebeteil, einem Summierungsgetriebe und einem Bereichsgetriebe bekannt, bei dem ein rein hydrostatischer. Übergangsfahrbereich für Geschwindigkeiten zwischen geringer Rückwärts- und geringer Vorwärtsfahrt ohne eine Bereichsübergabe und ohne das Schalten von Kupplungen, insbesondere bei Geschwindigkeit Null, und ein an diesen anschließender stufenlos hydrostatisch-mechanischer Fahrbereich mit Leistungsverzweigung für höhere Geschwindigkeiten vorgesehen ist. Hierbei sind der hydrostatische Getriebeteil, das Summierungsgetriebe und das Bereichsgetriebe koaxial zu einander auf der Zwischenwelle angeordnet.

Dadurch ist beim Wechsel von niedrigen Vorwärts- und Rückwärtsgeschwindigkeiten keine Bereichsübergabe erforderlich, so dass in diesem Geschwindigkeitsbereich das Schalten von Kupplungen entfällt. Als nachteilig hat sich jedoch die Baulänge erwiesen.

Aufgabe der vorliegenden Erfindung ist es, ausgehend vom genannten Stand der Technik ein hydrostatisch-mechanisches Leistungsverzweigungsgetriebe zu schaffen, bei dem bei Geschwindigkeit Null keine Kupplungen zu schalten sind, ein Fahrtrichtungswechsel zwischen vorwärts nach rückwärts ohne Verzögerungen möglich ist, das einen guten Wirkungsgrad aufweist und mit wenigen Fahrbereichen auskommt. Des weiteren soll die erforderliche Baulänge im Vergleich zum Stand der Technik erheblich reduziert werden.

Diese Aufgabe wird durch die Merkmale des Patentanspruchs 1 gelöst. Weitere Ausgestaltungen und Vorteile gehen aus den Unteransprüchen hervor.

Demnach wird ein hydrostatisch-mechanisches Leistungsverzweigungsgetriebe mit stufenlos veränderlichem Übersetzungsverhältnis vorgeschlagen, das einen hydrostatischen Getriebeteil bestehend aus einer ersten Hydrostateinheit mit verstellbarem Volumen und einer zweiten Hydrostateinheit mit konstantem Volumen und einen mechanischen Getriebeteil umfassend ein Summierungsgetriebe und ein Bereichsgetriebe aufweist, bei dem das Summierungsgetriebe und das Bereichsgetriebe nicht koaxial sondern achsversetzt zu den Hydrostateinheiten angeordnet sind.

Durch die erfindungsgemäße Konzeption ergibt sich in vorteilhafter Weise eine sehr kurze Baulänge.

Vorzugsweise ist das Summierungsgetriebe als dreistufiges Planetengetriebe ausgebildet und weist keine Hohlräder auf, wodurch der Achsabstand zwischen der Kurbelwelle und der Mitte der Hinterachse klein gehalten werden kann. Das Bereichsgetriebe ist vorzugsweise vierstufig ausgebildet.

Gemäß der Erfindung sind die benötigten Räder, Wellen und Kupplungen so ausgelegt, dass Gleichteile entstehen, die in mehreren Bereichen verwendet werden können.

Sowohl das Summierungsplanetengetriebe als auch das vierstufige Bereichsgetriebe mit den dazugehörenden Klauenkupplungen können in dem hinteren Getriebegehäuse vormontiert werden. Danach kann das vordere Getriebegehäuse über die vormontierte Einheit übergestülpt und mit dem hinteren Getriebegehäuse verschraubt werden. Ferner können Hydrostateinheiten, Druck- und Schmierpumpe, Druckfilter, Magnetventile und Elektronik in einem Modul vormontiert werden, was an einer seitlichen Öffnung des vorderen Getriebegehäuses montiert werden kann.

Das erfindungsgemäße Getriebe weist einen rein hydrostatischen Übergangsfahrbereich für Geschwindigkeiten zwischen geringer Rückwärts- und geringer Vorwärtsfahrt ohne eine Bereichsübergabe und ohne das Schalten von Kupplungseinrichtungen und einen an diesen anschließenden stufenlosen hydrostatisch-mechanischen Fahrbereich mit Leistungsverzweigung für höhere Geschwindigkeiten auf.

Im folgenden wird die Erfindung anhand der beigefügten Figur, welche eine schematische Darstellung einer bevorzugten Ausführungsform eines erfindungsgemäßen Getriebes ist, beispielhaft näher erläutert.

Der allgemeine Aufbau und die Funktionsweise hydrostatisch-mechanischer Leistungsverzweigungsgetriebe sind dem Fachmann bestens bekannt. Hier soll daher nur auf Besonderheiten der vorliegenden Erfindung eingegangen werden.

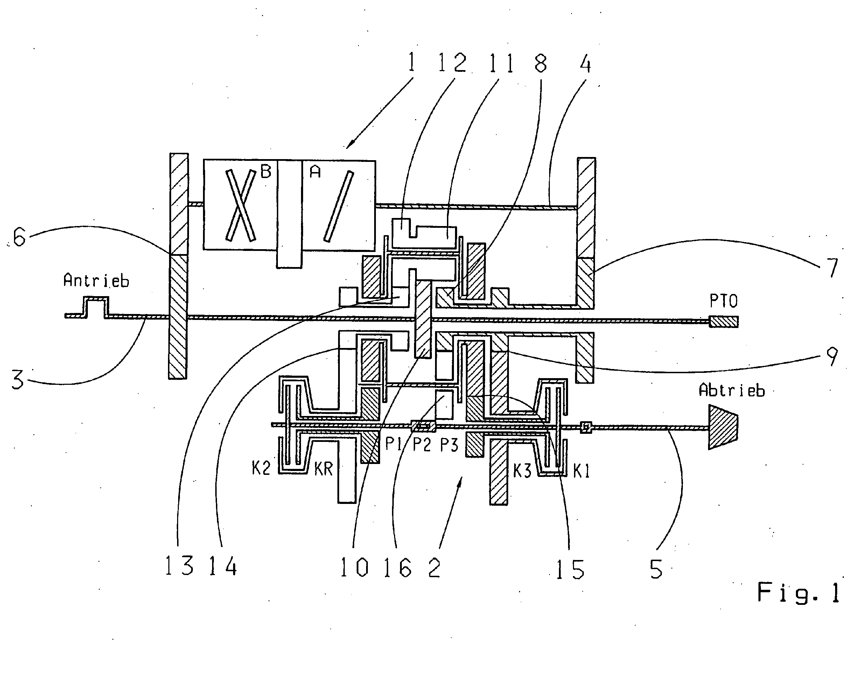

In Figur 1 ist ein erfindungsgemäßes hydrostatisch-mechanisches Leistungsverzweigungsgetriebe mit einem hydrostatischen Getriebeteil 1 und einem mechanischen Getriebeteil 2 gezeigt. Es umfasst eine Eingangswelle (Kurbelwelle) 3, eine Zwischenwelle 4, welche den Abtrieb des hydrostatischen Getriebeteils 1 bildet und eine Abtriebswelle 5. Die Eingangswelle 3 kann durch das Getriebe hindurch geführt werden und als PTO-Anschluss oder Zapfwellenantrieb dienen.

Der hydrostatische Teil 1 wird durch eine erste Hydrostateinheit A in Form eines Konstantmotors und durch eine zweite Hydrostateinheit B in Form einer Verstellpumpe vorzugsweise in "back to back"-Anordnung gebildet. Die beiden Einheiten A und B werden über ein Stimradpaar 6 durch die Eingangswelle 3 angetrieben.

Der mechanische Getriebeteil 2 umfasst ein Summierungsgetriebe, welches vorzugsweise als dreistufiges Planetengetriebe ohne Hohlräder ausgebildet ist. In der Figur sind die drei Planetenstufen mit den Bezugszeichen P1, P2 und P3 versehen. Das im mechanischen Getriebeteil 2 enthaltene Bereichsgetriebe weist vier Stirnradstufen auf. Wie aus der Figur ersichtlich, sind das Summierungsgetriebe und das Bereichsgetriebe achsversetzt zu den Hydrostateinheiten angeordnet, so dass eine besonders kompakte Bauweise entsteht. Bevorzugter Weise sind die Kupplungseinrichtungen K1, K2, K3, KR für die Stirnradstufen des Bereichsgetriebes auf der Abtriebswelle 5 angeordnet, wobei die Kupplung K1 die Abtriebswelle 5 mit dem Sonnenrad,8 des dritten Planetensatzes über eine Stimradstufe 9 lösbar verbindet, die Kupplung K2 die Abtriebswelle 5 mit dem Sonnenrad 13 des ersten Planetensatzes P1 über eine Stimradstufe 14 lösbar verbindet, die Kupplung K3 die Abtriebswelle 5 mit dem Planetenträger des zweiten Planetensatzes P2 über eine Stirnradstufe 15 lösbar verbindet und wobei die Kupplung KR die Abtriebswelle 5 mit dem Planetenträger der ersten Planetenstufe P1 über eine Zwischenrad und eine Stirnradstufe lösbar verbindet.

Die Funktionsweise des erfindungsgemäßen Leistungsverzweigungsgetriebes ist folgende: Das Anfahren des Fahrzeuges erfolgt rein hydrostatisch im Übergangsfahrbereich. Dabei wird die Drehzahl des hydrostatischen Getriebeteils 1 über zwei Stirnradstufen 7 und 9 auf die Abtriebswelle 5 geleitet, wobei die Kupplung K1 von Anfang an geschlossen ist und über den gesamten Fahrbereich des Übergangsfahrbereichs eingekuppelt bleibt. Durch ein Verstellen der Verstellpumpe B lässt sich die Ausgangsdrehzahl innerhalb des Fahrbereichs zwischen negativen und positiven Drehzahlen einstellen. Dadurch kann ein Geschwindigkeitsbereich von ca. -5 km/h bis +5 km/h abgedeckt werden. Beim Übergang von Vorwärts- zu Rückwärtsfahrt und umgekehrt ist in vorteilhafter Weise kein Schalten erforderlich.

Für höhere Geschwindigkeiten wird der hydrostatische Getriebeteil 1 mit dem mechanischen Getriebeteil 2 zu mehreren leistungsverzweigten Bereichen kombiniert. Dabei wird die Leistung zum einen aus dem hydrostatischen Getriebeteil 1 über die Zwischenwelle 4 und die Stimradstufe 7 zum Sonnenrad 8 der Planetenstufe P3 und zum anderen über die Antriebswelle direkt auf das Sonnenrad 10 der Planetenstufe P2 geleitet. Gemäß der Erfindung stehen die Planeten der Planetenstufen miteinander ständig direkt oder indirekt in Eingriff: der Planet 16 der dritten Planetenstufe P3 steht mit dem Planeten 11 der zweiten Planetenstufe P2 in Eingriff und der Planet der zweiten Planetenstufe P2 ist mit dem Planeten 12 der ersten Planeten stufe P1 verbunden.

Der Abtrieb für den ersten Vorwärtsfahrbereich erfolgt durch Schalten der Kupplung K2. Hierbei wird die Leistung vom Sonnenrad 10 der Planetenstufe P2 über den Planeten 11 der zweiten Planetenstufe, den Planeten 12 der ersten Planetenstufe P1, das Sonnenrad 13 der ersten Planetenstufe P1 und eine Stirnradstufe 14 auf die Abtriebswelle 5 übertragen.

Im zweiten Vorwärtsfahrbereich wird die Kupplung K3 geschlossen. Hierbei wird die Leistung vom Sonnenrad 10 der Planetenstufe P2 über den Planetenträger der Planetenstufe P2 und die Stimradstufe 15 auf die Abtriebswelle übertragen.

Für die Rückwärtsfahrt wird die Kupplung KR geschlossen; die Leistung wird vom Sonnenrad 10 der Planetenstufe P2 über den Planetenträger der Planetenstufe P1 und ein Zwischenrad auf die Abtriebswelle übertragen.

Durch diese Aufteilung des Gesamtfahrbereichs in einen rein hydrostatischen Übergangsfahrbereich für niedrige Vorwärts- und Rückwärtsgeschwindigkeiten und einen leistungsverzweigten Fahrbereich für höhere Geschwindigkeiten entsteht ein shuttle-taugliches Getriebe, das einen Fahrtrichtungswechsel ohne jede Verzögerung und Leistungsunterbrechung ermöglicht. Die Geschwindigkeitswerte für die Fahrbereiche liegen für den Rückwärtsfahrbereich in etwa zwischen 5 und 20 km/h, für den ersten Vorwärtsfahrbereich zwischen 5 und 13km/h und für den dritten Vorwärtsfahrbereich zwischen 13 und 50 km/h, wobei durch eine Veränderung der Übersetzungsverhältnisse der Stirnradstufen andere Geschwindigkeitsbereiche abgedeckt werden können.

Selbstverständlich fällt auch jede konstruktive Ausbildung, insbesondere jede räumliche Anordnung der Planetenstufen und der Schaltelemente an sich sowie zueinander und soweit technisch sinnvoll, unter den Schutzumfang der vorliegenden Ansprüche ohne die Funktion des Getriebes, wie sie in den Ansprüchen angegeben ist, zu beeinflussen, auch wenn diese Ausbildungen nicht explizit in der Figur oder in der Beschreibung dargestellt sind.

### Bezugszeichen

- 1: hydrostatischer Getriebeteil
- 2: mechanischer Getriebeteil
- 3: Eingangswelle
- 4: Zwischenwelle
- 5: Abtriebswelle
- 6: Stirnradstufe
- 7: Stirnradstufe
- 8: Sonnenrad
- 9: Stimradstufe
- 10: Sonnenrad
- 11: Planet
- 12: Planet
- 13: Sonnenrad
- 14: Stimradstufe
- 15: Stimradstufe
- 16: Planet

- K1: Kupplung
- K2: Kupplung
- K3: Kupplung
- KR: Kupplung

## Patentansprüche

1. Hydrostatisch-mechanisches Leistungsverzweigungsgetriebe mit stufenlos veränderlichem Übersetzungsverhältnis, das einen hydrostatischen Getriebeteil (1) bestehend aus einer ersten Hydrostateinheit (B) mit verstellbarem Volumen und einer zweiten Hydrostateinheit (A) mit konstantem Volumen und einen mechanischen Getriebeteil (2) umfassend ein Summierungsgetriebe und ein Bereichsgetriebe aufweist, wobei das Summierungsgetriebe und das Bereichsgetriebe achsversetzt zu den Hydrostateinheiten angeordnet sind, mit Kupplungseinrichtungen **dadurch gekennzeichnet, dass** die Kupplungseinrichtungen (K1, K2, K3, KR) für die Stirnradstufen des Bereichsgetriebes auf der Abtriebswelle (5) angeordnet sind, wobei eine Kupplung (K1) die Abtriebswelle (5) über eine Stirnradstufe (9) lösbar verbindet, eine Kupplung (K2) die Abtriebswelle (5) mit dem Sonnenrad (13) des ersten Planetensatzes (P1) über eine Stirnradstufe (14) lösbar verbindet, eine Kupplung (K3) die Abtriebswelle (5) mit dem Planetenträger des zweiten Planetensatzes (P2) über eine Stirnradstufe (15) lösbar verbindet und wobei eine Kupplung (KR) die Abtriebswelle (5) mit dem Planetenträger der ersten Planetenstufe (P1) über eine Zwischenrad lösbar verbindet.

2. Hydrostatisch-mechanisches Leistungsverzweigungsgetriebe nach Anspruch 1, **dadurch gekennzeichnet, dass** das Summierungsgetriebe als dreistufiges Planetengetriebe, umfassend drei Planetenstufen (P1, P2, P3) ohne Hohlräder ausgebildet ist, wobei die Planeten der Planetenstufen (P1, P2, P3) miteinander direkt oder indirekt in Eingriff stehen.

3. Hydrostatisch-mechanisches Leistungsverzweigungsgetriebe nach Anspruch 1 oder 2, **dadurch gekennzeichnet, dass** das Bereichsgetriebe vierstufig ausgebildet ist.

4. Hydrostatisch-mechanisches Leistungsverzweigungsgetriebe nach einem der vorhergehenden Ansprüche, **dadurch gekennzeichnet, dass** ein rein hydrostatischer Übergangsfahrbereich für Geschwindigkeiten zwischen geringer Rückwärts- und geringer Vorwärtsfahrt ohne eine Bereichsübergabe und ohne das Schalten von Kupplungseinrichtungen und ein an diesen anschließender stufenlos hydrostatisch-mechanischer Fahrbereich mit Leistungsverzweigung für höhere Geschwindigkeiten vorgesehen ist.

5. Hydrostatisch-mechanisches Leistungsverzweigungsgetriebe nach Anspruch 4, **dadurch gekennzeichnet, dass** im rein hydrostatischen Übergangsfahrbereich die Drehzahl des hydrostatischen Getriebeteils (1) über eine Stimradstufe (7) und über eine weitere Stimradstufe (9) auf die Abtriebswelle (5) geleitet wird, wobei die Kupplung (K1) von Anfang an geschlossen ist und über den gesamten Fahrbereich des Übergangsfahrbereichs geschlossen bleibt und wobei durch ein Verstellen der Verstellpumpe (B) die Ausgangsdrehzahl innerhalb des Fahrbereichs zwischen negativen und positiven Drehzahlen einstellbar ist.

6. Hydrostatisch-mechanisches Leistungsverzweigungsgetriebe nach Anspruch 4, **dadurch gekennzeichnet, dass** der hydrostatisch-mechanische Fahrbereich mit Leistungsverzweigung zwei Vorwärtsfahrbereiche und einen Rückwärtsfahrbereich aufweist.

7. Hydrostatisch-mechanisches Leistungsverzweigungsgetriebe nach Anspruch 6, **dadurch gekennzeichnet, dass** der Abtrieb für den ersten Vorwärtsfahrbereich durch Schalten der Kupplung (K2) erfolgt, wobei die Leistung vom Sonnenrad (10) der zweiten Planetenstufe (P2) über den Planeten (11) der Planetenstufe (P2), den Planeten (12) der ersten Planetenstufe (P1), das Sonnenrad (13) der ersten Planetenstufe (P1) und eine Stimradstufe (14) auf die Abtriebswelle (5) übertragen wird.

8. Hydrostatisch-mechanisches Leistungsverzweigungsgetriebe nach Anspruch 6 oder 7, **dadurch gekennzeichnet, dass** der Abtrieb für den zweiten Vorwärtsfahrbereich durch Schalten der Kupplung (K3) erfolgt, wobei die Leistung vom Sonnenrad (10) der Planetenstufe (P2) über den Planetenträger der Planetenstufe (P2) und eine Stimradstufe (15) auf die Abtriebswelle (5) übertragen wird.

9. Hydrostatisch-mechanisches Leistungsverzweigungsgetriebe nach Anspruch 6 oder 7, **dadurch gekennzeichnet, dass** der Abtrieb für den Rückwärtsfahrbereich durch Schalten der Kupplung (KR) erfolgt, wobei die Leistung vom Sonnenrad (10) der Planetenstufe (P2) über den Planetenträger der Planetenstufe (P1) und ein Zwischenrad auf die Abtriebswelle (5) übertragen wird.

10. Hydrostatisch-mechanisches Leistungsverzweigungsgetriebe nach einem der vorangehenden Ansprüche, **dadurch gekennzeichnet, dass** das Summierungsgetriebe und das Bereichsgetriebe mit den dazugehörenden Kupplungen in dem hinteren Getriebegehäuse vormontierbar sind, so dass das vordere Getriebegehäuse über die vormontierte Einheit übergestülpt und mit dem hinteren Getriebegehäuse verschraubt werden kann.

11. Hydrostatisch-mechanisches Leistungsverzweigungsgetriebe nach einem der vorangehenden Ansprüche, **dadurch gekennzeichnet, dass** Hydrostateinheiten, Druck- und Schmierpumpe, Druckfilter, Magnetventile und Elektronik in einem Modul vormontierbar sind, welches an einer seitlichen Öffnung des vorderen Getriebegehäuses montiert werden kann.

## Claims

1. Hydrostatic-mechanical power split transmission with continuously variable transmission ratio, featuring a hydrostatic transmission section (1) comprising a first hydrostatic unit (B) with variable displacement and a second hydrostatic unit (A) with constant displacement and a mechanical transmission section (2) comprising a summation transmission and a range-change unit whereby the summation transmission and the range-change unit are arranged axially offset relative to the hydrostatic units, with clutch units, **characterized in that** these clutch units (K1, K2, K3, KR) for the spur gear stages of the range-change unit are arranged on the output shaft (5), whereby one clutch (K1) detachably connects the output shaft (5) by means of a spur gear stage (9), whereby one clutch (K2) detachably connects the output shaft (5) with the sun gear (13) on the first planetary gear stage (P1) by means of a spur gear stage (14), whereby one clutch (K3) detachably connects the output shaft (5) with the planet carrier on the second planetary gear set (P2) by means of a spur gear stage (15) and whereby one clutch (KR) detachably connects the output shaft (5) with the planet carrier on the first planetary gear stage (P1) by means of an idler gear.

2. Hydrostatic-mechanical power split transmission according to claim 1, **characterized in that** the summation gear is designed as a three-stage planetary transmission comprising three planetary stages (P1, P2, P3) without ring gears, with the planet gears of the planetary stages (P1, P2, P3) meshing directly or indirectly with one another.

3. Hydrostatic-mechanical power split transmission according to claim 1 or 2, **characterized in that** the range-change unit is designed as a four-stage unit.

4. Hydrostatic-mechanical power split transmission according to one of the preceding claims, **characterized in that** a purely hydrostatic transitional driving mode is provided for speeds between slow reverse and slow forward travel without any range change or engagement of clutch units being involved, and a subsequent continuously variable hydrostatic-mechanical driving mode is provided with power split for higher speeds.

5. Hydrostatic-mechanical power-split transmission according to claim 4, **characterized in that** in the purely hydrostatic transitional driving mode the speed of the hydrostatic transmission section (1) is directed via a spur gear stage (7) and via a further spur gear stage (9) to the output shaft (5), whereby the clutch (K1) is closed right from the outset and remains closed across the entire driving range of the transitional driving mode, and whereby adjustment of the variable displacement pump (B) permits setting of the output speed within the driving range between negative and positive speeds.

6. Hydrostatic-mechanical power split transmission according to claim 4, **characterized in that** the hydrostatic-mechanical driving mode with power split features two forward driving ranges and one reverse range.

7. Hydrostatic-mechanical power split transmission according to claim 6, **characterized in that** the output for the first forward driving range is delivered by engagement of a clutch (K2), whereby power from the sun gear (10) on the second planetary gear stage (P2) is transmitted to the output shaft (5) via the planet gears (11) of the planetary stage (P2), the planet gears (12) of the first planet stage (P1), the sun gear (13) of the first planet stage (P1), and a spur gear stage (14).

8. Hydrostatic-mechanical power split transmission according to claim 6 or 7, **characterized in that** the output for the second forward driving range is provided by engagement of a clutch (K3), whereby the power from the sun gear (10) on planetary gear stage (P2) is transmitted to the output shaft (5)via the planet carrier on the planetary gear stage (P2) and a spur gear stage (15).

9. Hydrostatic-mechanical power split transmission according to claim 6 or 7, **characterized in that** the output for the reverse driving range is provided through engagement of a clutch (KR), whereby the power from the sun gear (10) on planetary gear stage (P2) is transmitted to the output shaft (5) via the planet carrier on the planetary gear stage (P1) and an idler gear.

10. Hydrostatic-mechanical power split transmission according to one of the preceding claims, **characterized in that** the summation gear and the range-change unit with associated clutches can be preassembled in the rear housing section, so that the front housing section can be put over the preassembled unit and bolted to the rear housing section.

11. Hydrostatic-mechanical power split transmission according to one of the preceding claims, **characterized in that** hydrostatic units, pressure and lubricating pump, pressure filter, solenoid valves and electronics can be preassembled in a module which can be fitted to a lateral opening of the front section of the transmission housing.

## Revendications

1. Transmission à dérivation de la puissance hydrostatique-mécanique à variation continue du rapport de démultiplication, comportant une boîte hydrostatique (1) composée d'une première unité hydrostatique (B) à débit variable et d'une deuxième unité hydrostatique (A) à débit constant, et une boîte mécanique (2) comprenant une boîte totalisatrice et un groupe-relais, sachant que la boîte totalisatrice et le groupe-relais sont disposés à axes décalés par rapport aux unités hydrostatiques, et dotés de dispositifs d'embrayage, **caractérisée en ce que** les dispositifs d'embrayage (K1, K2, K3, KR) des étages à pignons cylindriques du groupe-relais sont disposés sur l'arbre de sortie (5), sachant qu'un embrayage (K1) relie l'arbre de sortie (5) de façon amovible par l'intermédiaire d'un étage à pignons cylindriques (9), sachant qu'un embrayage (K2) relie l'arbre de sortie (5) de façon amovible et par l'intermédiaire d'un étage à pignons cylindriques (14) au planétaire (13) du premier train épicycloïdal (P1), sachant qu'un embrayage (K3) relie l'arbre de sortie (5) de façon amovible et par l'intermédiaire d'un étage à pignons cylindriques (15) à l'arbre porte-satellites du deuxième train épi cycloïdal (P2), et sachant qu'un embrayage (KR) relie l'arbre de sortie (5) de façon amovible par l'intermédiaire d'un pignon intermédiaire à l'arbre porte-satellites du premier train épi cycloïdal (P1).

2. Transmission à dérivation de la puissance hydrostatique-mécanique selon la revendication 1, **caractérisée en ce que** la boîte totalisatrice est réalisée comme boîte planétaire à trois étages comprenant trois trains épicycloïdaux (P1, P2, P3) sans couronnes, sachant que les satellites des trains épicycloïdaux (P1, P2, P3) sont en prise directe ou indirecte les uns avec les autres.

3. Transmission à dérivation de la puissance hydrostatique-mécanique selon la revendication 1 ou 2, **caractérisée en ce que** le groupe-relais est réalisé avec quatre étages.

4. Transmission à dérivation de la puissance hydrostatique-mécanique selon une des revendications précédentes, **caractérisée en ce que** est prévue une plage d'utilisation transitoire purement hydrostatique pour des vitesses comprises entre marche-arrière lente et marche avant lente sans passage par le groupe-relais et sans enclenchement de dispositifs d'embrayage ni aucune plage d'utilisation en aval à variation continue hydrostatique-mécanique à dérivation de la puissance pour des vitesses plus élevées.

5. Transmission à dérivation de la puissance hydrostatique-mécanique selon la revendication 4, **caractérisée en ce que** dans la plage d'utilisation transitoire purement hydrostatique la vitesse de rotation de la boîte hydrostatique (1) est transmise par l'intermédiaire d'un étage à pignons cylindriques (7) et par l'intermédiaire d'un autre étage à pignons cylindriques (9) à l'arbre de sortie (5), sachant que l'embrayage (K1) est fermé dès le début et qu'il reste fermé pendant toute la plage d'utilisation transitoire et sachant que par le réglage de la pompe à débit variable (B) il est possible de régler la vitesse de rotation de sortie à l'intérieur de la plage d'utilisation sur une vitesse de rotation comprise entre une valeur négative et une valeur positive.

6. Transmission à dérivation de puissance hydrostatique-mécanique selon la revendication 4, **caractérisée en ce que** la plage d'utilisation hydrostatique-mécanique à dérivation de la puissance comporte deux plages de marche avant et une plage de marche- arrière.

7. Transmission à dérivation de la puissance hydrostatique-mécanique selon la revendication 6, **caractérisée en ce que** la transmission de couple pour la première plage d'utilisation en marche avant est réalisée par l'enclenchement de l'embrayage (K2), sachant que la puissance est transmise par le planétaire (10) du deuxième train épicycloïdal (P2) par l'intermédiaire du satellite (11) du train épicycloïdal (P2), par le satellite (12) du premier train épicycloïdal (P1), par le planétaire (13) du premier train épicycloïdal (P1) et par un étage à pignons cylindriques (14) sur l'arbre de sortie (5).

8. Transmission à dérivation de la puissance hydrostatique-mécanique selon la revendication 6 ou 7, **caractérisée en ce que** la transmission de couple pour la deuxième plage d'utilisation en marche avant est réalisée par l'enclenchement de l'embrayage (K3), sachant que la puissance est transmise par le planétaire (10) du train épicycloïdal (P2) par l'intermédiaire de l'arbre porte-satellites du train épicycloïdal (P2) et par un étage à pignons cylindriques (15) sur l'arbre de sortie (5).

9. Transmission à dérivation de la puissance hydrostatique-mécanique selon la revendication 6 ou 7, **caractérisée en ce que** la transmission de couple pour la plage de marche-arrière est réalisée par l'enclenchement de l'embrayage (KR), sachant que la puissance est transmise par le planétaire (10) du train épicycloïdal (P2) par l'intermédiaire de l'arbre porte-satellites du train épicycloïdal (P1) et par un pignon intermédiaire sur l'arbre de sortie (5).

10. Transmission à dérivation de la puissance hydrostatique-mécanique selon une des revendications précédentes, **caractérisée en ce que** la transmission totalisatrice et le groupe- relais avec les embrayages y associés peuvent être prémontés dans le carter postérieur de la boîte de vitesses, de façon à ce que le carter antérieur de la boîte de vitesses puisse être plaçé sur l'unité prémontée et vissée au carter postérieur de la boîte de vitesses.

11. Transmission à dérivation de la puissance hydrostatique-mécanique selon une des revendications précédentes, **caractérisée en ce que** les unités hydrostatiques, la pompe refoulante et de lubrification, le filtre sur refoulement, les électrovannes et l'électronique peuvent être prémontés dans un module, celui-ci pouvant être monté au niveau d'un orifice latéral du carter antérieur de la boîte de vitesses.
